# EUROPEAN PATENT SPECIFICATION

(11) **EP 0 886 755 B1**
(45) Date of publication and mention of the grant of the patent: **21.11.2001**
(21) Application number: 96925767.4
(22) Date of filing: 01.08.1996
(51) Int. Cl.: G01B 3/12

(54) **MEASURING DEVICE AND A METHOD FOR MEASURING OBJECTS**
MESSVORRICHTUNG UND VERFAHREN ZUM MESSEN VON GEGENSTÄNDEN
DISPOSITIF DE MESURE ET PROCEDE POUR MESURER DES OBJETS

(30) Priority: 01.08.1995 FI 953671
(43) Date of publication of application: 30.12.1998
(73) Proprietor: Makkonen, Veijo Sakari, 04230 Kerava (FI)
(72) Inventor: Makkonen, Veijo Sakari, 04230 Kerava (FI)
(74) Representative: Ruuskanen, Juha-Pekka
(86) International application number: FI9600426
(87) International publication number: WO9705447

(56) References cited:
- US-A- 3 829 976
- US-A- 4 377 850

## Description

The present invention relates to a measuring device according to the preamble of claim 1 to be used in measuring of, for example, sheets of paper, wall papers, fabrics or sheets of metal, plastic or wood and similar. The invention relates further to a method according to the preamble of claim 10 for measuring of objects similar to those mentioned above.

At present a tape measure or a measuring stick, which usually is made of wood and has a length of 0.5 m, are commonly used in, for instance, shops selling textiles, carpets, construction materials and in hardware stores. After the measuring operation the measured object is cut by scissors, knife or other suitable cutting means.

When measuring by the measuring stick a salesperson measures by said 0.5 m measure a desired amount of fabric or another material, such as wall paper or sheet of metal etc., for the client by means of moving the measuring stick by "from end-to-end" method on top of or closely adjacent to the material to be measured. However, said method is not especially accurate and already in a distance of two meters an essentially large measuring error may happen. This error may be a benefit for the client or for the shop keeper, depending on the measurer. Therefore, in addition to the fact that this labour requiring method causes a disadvantage and loss to the other party of the business due to the measuring error, an additional disadvantage is that the real consumption of the material cannot be estimated in a reliable manner due to repeated measuring errors and a lack of a reliable automatic method for collecting the statistics, which in turn may lead to oversized "just-in-case- storages" or sometimes to a shortage of the material despite the fact that storage calculations show that there still should be some material left.

In addition, the measuring operation of, for instance, a bathroom carpet or a crass carpet or a large, about 50 m long wall paper which all are stored in a roll, by a tape measure is difficult and includes a corresponding possibility for an error as the stick does, especially when the person measuring is not experienced and precise in the work. The effective length of the tape measure is also restricted and thus when measuring longer lengths several subsequent measures are required, which is slow to perform and increases further the risk for errors.

The sales stands of rolled products are sometimes provided with a meter whereby the product in said stand and discharged therefrom can be measured by said meter. However, the possibility for measuring is restricted to a product discharged from that given stand and due to the fact that such meters are relatively expensive, the use thereof has been relatively limited, and most of the products are outside this possibility for measuring. The meter is also essentially expensive in relation to the price of the products sold and also in relation to the total price of the stands, and therefore the manufacturers of the stands have not been willing to take such stands provided with meters having a low demand in the markets into their selections. In addition, the adjustment of the meters to the stands has proven to be relatively difficult and almost in every case the assembly requires an unique adjustment which has increased the costs and decreased the usability and desirability thereof, for instance in shop usage. Furthermore, the accuracy of the meters assembled into the stands has not always been satisfactory.

Solutions for measuring wide, eg. sheet-like materials, such as fabrics or carpets, are known for instance from US patents 3,829,976 (Moore), 3,838,519 (Chick) and 4,195,410 (Stroh-meyer). These disclose fixedly mounted apparatus by means of which lengths of, for instance, carpets or fabrics can be measured e.g. in factory conditions, packing plants, and similar. In other words, it is possible to measure the sheet-like materials by apparatus according to said publications as the sheets move on conveyors and pass thereon fixedly mounted metering devices. Another fixedly mounted metering apparatus provided with electronic functions is disclosed in open laid DE document 26 28 505 B1.

A disadvantage of the solutions disclosed by the above publications has, however, been the complex, expensive and "heavy" mounting, which requires fixed attaching, whereby they are not suitable to be used, for instance, in hardware stores or draper's shops, and especially are not suitable to be used manually, i.e. such that the person measuring could hold the measuring device in his or hers hand during the measuring operation. Furthermore, it has not been possible to measure anything else by the fixed measuring devices than a material forwarding on that given conveyor, which requires several separate measuring devices for different materials / conveyors.

US patent No.2,739,386 discloses a hand held measuring device comprising a measuring wheel adapted to be moved along the surface of the textile and a complex measuring information disclosing mechanism mounted in connection with it, said mechanism being formed of a screw extending inside the measuring device handle and of pointers by positions of which the user may read the measuring result. However, the apparatus is difficult to use and especially a readout of a reliable measuring result has caused difficulties for the normal users. "Drawing speed" of the apparatus along the measured textile is restricted due to the used pointing technique and general structure thereof and the measuring has not been especially fast to perform. In addition "nullifying" and "calibration" requires operations, which are complex and include several stages, which has further retarded the operations thereof, and decreased the capability and adaptability to rushed selling business. The apparatus is also sensitive for dirt, and pieces of fabric, threads and/or fibres entering between the pointer / screw and co-operational parts thereof have repeatedly blocked the measuring apparatus and/or interrupted the measuring by it. Corresponding problems applies for a hand-held measuring and calculating apparatus disclosed in US-patent 4,377,850, said device having a roller means and cam means attached to said roller means for activating a switch connected to pulse counting means. This device can only perform a measuring operation on a material surface firm enough to engage with the roller. This known device cannot perform any other operations to the material than indicating measured and calculated values based on the length of the roller path.

It is an object of the present invention to overcome the disadvantages of the prior art and to provide a totally new solution for a hand held measuring device and for a method for performing a measure by a hand held device. Solution according to the present invention provides a measuring device which is fast in operation, but more reliable than the prior art solutions, light and easy to use and which device and method eases remarkably routines of a person working with measuring and cutting of sheet or web like materials.

It is also an object of the present invention to provide a measuring device and a measuring method by means of which the object to be measured can also be cut or severed in to a predetermined length or at desired point.

It is an additional object of the present invention to provide a measuring device and a method by means of which it is possible to monitor the general properties of the measured object, such as thickness and variations thereof, width, roughness or evenness of the surface thereof.

It is an additional object of the present invention to provide a measuring device and a method by means of which it is possible to collect general information about the finished measurements and/or cuts.

It is also an object of the present invention to provide a measuring device and a measuring method in which the collected information can be transmitted to an information storage and control system used for instance in order to keep the consumption data of the material updated.

It is also an object to provide a cutting measuring device the cutting features whereof can be changed and/or the metering unit whereof can be unfastened.

The present invention is based on the idea that by providing a hand held measuring device including means for detecting the measurement information from an object to be measured based on the amount of the relative movement between the measuring device and the measured object, and means for cutting the measured object a measuring device is provided which obtains the above objects.

More precisely, the apparatus according to the present invention is mainly characterized by what is disclosed in appended claims 1...9 and especially by the characterizing portion of claim 1. The method according to the present invention is mainly characterized by what is disclosed in appended claims 10...14 and especially by claim 10.

According to a preferred embodiment of the present invention the measuring device comprises a base portion wherein a handle portion and at least one fixed jaw portion is combined. Furthermore, the device comprises a metering means ie. eg. metering wheel means or roller means which is preferably adapted to bear against the object to be measured and therein operationally connected means for deriving a measurement information from the rotation of the roller means and for displaying it in an easily readable form to the user. In some instances the device further comprises a backing means adapted to bear against the object on the opposite side relative to the roller means, said backing means preferably being movable to an open position, ie. movable off from the object for facilitating the placement of the object in to the measuring device and the removal thereof.

According to a preferred embodiment the device further comprises means for cutting and/or severing of the object at a desired point. According to one alternative a desired length can be preset to the measuring device after which it stops, gives a voice signal or a light signal or otherwise gives a signal that the preset length has been achieved.

According to one preferred embodiment the measuring device is provided with controlling means, preferably with micro processor means, for registering and storing the information gathered by it and for controlling the functions of the device. The device can also be provided with connection means so as to connect it to other control means such as storage control means by eg. a suitable serial port or wireless transmission system for transmitting eg. information or control signals from the measuring device to the system and vice versa. Based on one such information the measuring device is enabled to give eg. the price for the measured object based on the latest updated prices without a need for the user to separately to calculate the price or to set the price per unit to the device.

According to one further preferred form the measuring device comprises means for detecting and showing at least one other measurement information such as thickness or width. The means may be connected to the central control unit of the device by means of which an information and/or numeric or otherwise displayed presentation of eg. the total amount, consumed, volume, surface area, variations in thickness etc. of the material can be provided.

When using the device according to the invention the operation preferably initiates from the nullifying of the display of the meter of the device which may occur by using a nullifying button adapted to said measuring device. The device may be simultaneously calibrated for instance such that as the metering wheel and the backing member, such as another wheel, are bearing against each other the display will present 0 in desired scale, such as in meters, in centimeters, in millimeters or in inches. According to one alternative the displaying means can show the measurement in a selected scale and in a desired unit and these may be adapted to show the measurement in various scales and/or units such that the user can change the unit during the measuring operation, for instance by pressing a suitable button.

The device is subsequently placed in close connection to the object to be measured such that the metering means, preferably metering wheel means contacts the surface of the object. The device is drawn along the object, whereby a length that the measuring device and the object have moved relative to each other can be derived from the rotation of the wheel. Said rotational movement is changed by suitable means, such as by mechanical star wheel means or electronical means to a clear and readily readable numeric form and is displayed by suitable display means. The measurement data can be displayed continuously as the metering proceeds and the moving of the device can be stopped in a suitable position, whereby it is possible to provide an accurate measured length of the object, such as a fabric.

According to one preferred embodiment the object to be measured is cut / severed by a blade means which is arranged to the measuring device.

Remarkable advantages are obtained by the invention. For example, retailers selling sheet-like or web-like materials can omit the inaccurate and inefficient measuring by a measuring stick or a tape measure. The obtained measurements are accurate and the measuring operation is easy and fast to perform. The measuring device is, however, simple in design and economical to manufacture. Instead of several prior used measuring devices, such as those mounted one in each single sales stands, one measuring device in enough in most cases to perform measurements in connection with several different stands. Furthermore, the obtained measurement data can be stored and transmitted to another means, such as to a central storage control system. In addition to that the user may cut the measured object by the same means immediately after the measurement has been performed, whereby one single device replaces various known apparatus and the measuring / cutting operation can be performed as one single operation.

In the following the present invention and the other objects and advantages thereof will be described by way of an example with reference to the annexed drawings, in which similar reference characters throughout the various figures refer to similar features. It should be understood that the following description of an example of the invention is not meant to restrict the invention to the specific forms presented in this connection but rather the present invention is meant to cover all modifications, similarities and alternatives which are included in the spirit and scope of the present invention, as defined by the appended claims. It is also noted that the term object is indented to mean all sheet, web or band like objects or materials, such as paper, plastic, fabric, sheet of wood, thin sheets etc. sheets and similar objects suitable for measurements.

Figure 1 discloses a simplified schematic side view of an embodiment according to the present invention.

Figure 2 discloses an alternative embodiment of the measuring device according to the present invention.

Figure 3 discloses a schematic view of an embodiment of the present invention.

Figure 4 discloses a schematic view of one preferred additional embodiment of the present invention.

Figures 5a, 5b and 5c disclose alternative embodiments of a measuring head means of the measuring device according to the present invention.

Figures 6 and 7 disclose schematically some additional embodiments.

Figures 8a, b and c are perspective views of a further embodiment.

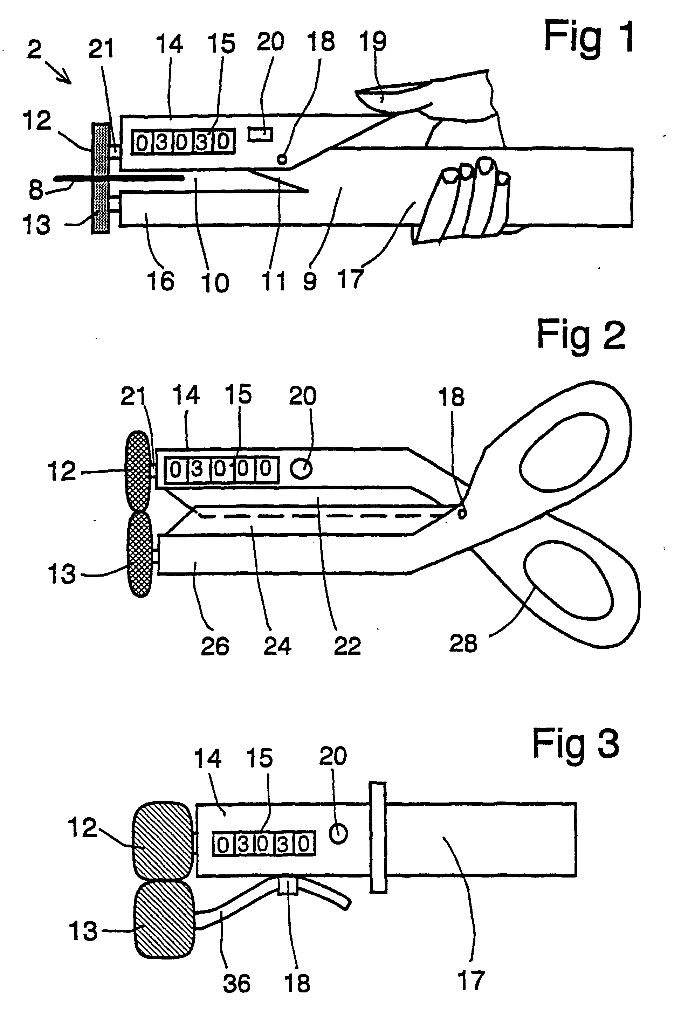

Fig. 1 discloses one preferred embodiment of a measuring device 2. The measuring device 2 comprises a base portion 9 to which a fixed jaw portion 16 and a handle portion 17 enabling a gripping by hand are arranged. A further jaw means 14 is arranged co-operationally in connection with the base portion 9 by means of a suitable pivoting means 18. The ends of both the fixed and the pivotable jaw means 14 are provided with roller means 12 and 13 such that an object or a sheet like material 8 drawn between them causes a rotation of at least the upper roller means 12.

The surface material of the roller means can be of suitable friction material, such as rubber and in addition to that it is preferably to provide the surface of at least the roll 12 with suitable grooving, pattern or roughing to provide a better "gripping" between roller means and the object to be measured. According to one alternative the roller means 12 and possibly even the counter roll 13 are provided with spike or tooth means. In this case the spikes may be adapted to penetrate through the object material to be measured, either such that the spikes of the counter roll 13 align or interleave with the spikes or teeth of the roller means 12. According to a still further alternative the rolls 12 and/or 13 can be replaced to be suitable from their surface characteristics or diameter in accordance with the material to be measured. In this case the rolls can be replaced by other rolls, the "gripping properties" thereof can be changed for instance by adjustable spike or toothing means or the diameter thereof can be changed by suitable means.

The roller means 12 is operationally connected by an axle 21 to the base portion 9, and in the example to display or presentation means 15 adapted to said further jaw 14, which means are indicating the amount of material which has passed between the roller means 12 and 13. The meter and/or displaying means 15 may be, for instance, a numeric display of a suitable mechanical or electronic type, and in some cases the device may be provided with an indicator means which indicates eg. by LED-lights the amount of rotation of the roll 12 or a voice signal apparatus which gives a peep-sound as a preset amount of material 8 has passed through the rolls. A nullifying button 20 of the meter 15 is also shown.

Measuring means may also comprise different memory and control means, such as a micro processor, by means of which the measuring means can, for example, be preset with different lengths and/or it can collect different data into the memory thereof concerning eg. measured or sold lengths in meters and/or amount of cut objects.

A slot 10 provided between the jaw means 14 and 16 is also shown, said slot being adapted to receive a width of the material 8 to be measured extending beyond the rolls 12 and 13 in the measuring device. A cutting means 11 is adapted into the back portion of the slot 10, by means of which the material 8 to be measured, such as a sheet of fabric or paper or similar, can be cut off as the measuring operation has ended.

The movable jaw means 14 can also be biased by a spring such that the roll 12 bears against the roll 13 with an appropriate force and such that the jaw 16 can be easily opened by eg. a movement of a thumb 19.

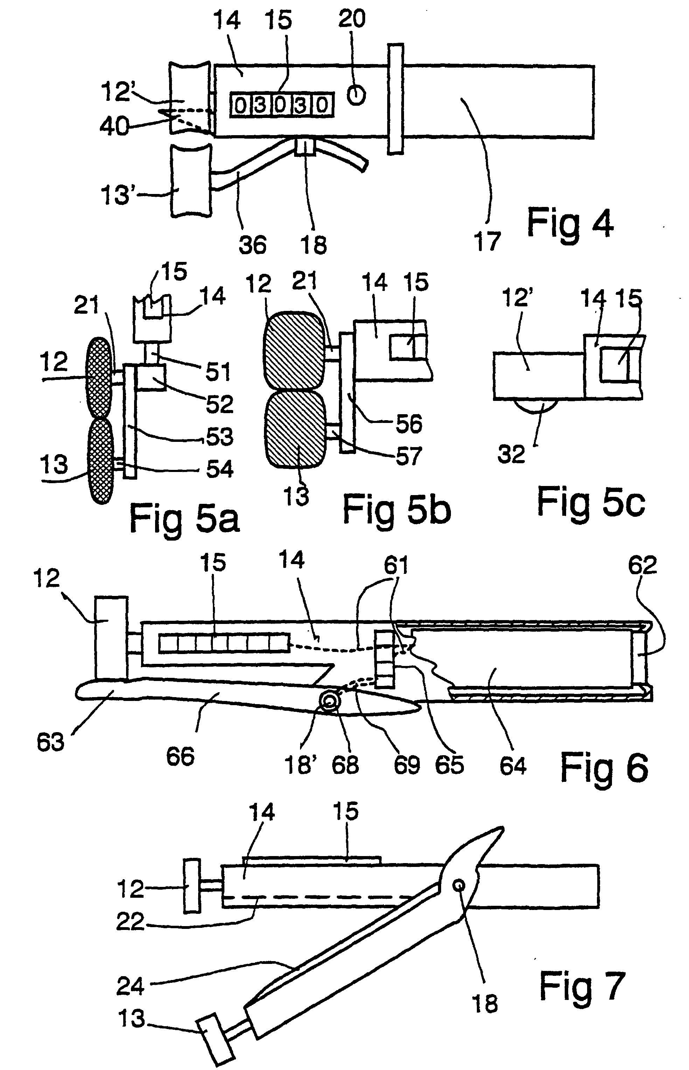

Figure 2 discloses an alternative embodiment in which the measuring device is combined with scissors-like means, whereby the material can be cut by blade means 22 and 24 when necessary. Figure 7 discloses one alternative to provide scissor-like means. Furthermore, in figure 7 the display means 15 of the results of the measurement are arranged in the portion on top of the jaw portion 14 such that the user may view the measuring results all the time.

Figure 3 discloses a measuring device comprising a base portion to which the actual measuring wheel means 12 and therein operationally connected counter means 15 are arranged. Movable counter roll means 13 is attached to the base portion by a pivoting means 36 of essentially light design.

Figure 4 discloses a base construction which corresponds to that of figure 3. The roll means 12 and 13' are, however, of concave type and are especially suitable for measuring string-like or other narrow materials. A blade means 40 suitable for cutting off the string-like materials can be seen beyond the roll.

Figures 5a and b disclose alternative ways to attach the metering wheel means. In figure 5a the axle 21 of the metering wheel means is adapted to a herringbone gear 52 from which an axle 51 extends to the counter means 14. In figure 5b the distance between the wheels 12 and 13 is set fixedly, ie. they are attached to a fixed distance from each other for instance by a plate means 57.

In a design disclosed in Figure 5c the metering wheel means is replaced by a ball means 32 arranged in the metering sensing means 12'. This kind of solution to detect the amount of movement is known, for example, from a mouse used in connection with computers. Other solutions used in the mouse are also possible to be used in connection with the invention as well as for example all solutions utilizing light or laser beam. These solutions which do not require touching to the object are known eg. from reading heads of compact disc players, from different automatic light optical measuring devices etc., and thus are not explained in more detail.

According to a solution disclosed in schematic figure 6, partially in section, the measuring device according to the invention is further provided with means 68 for defining the thickness of the material 8 to be measured. The sensing means 68 used for defining the thickness are disposed in connection with a pivoting point 18' whereby the thickness of the material is obtained precisely during the measurement from the opening angle between the jaws 14 and 66. Different angle detectors 68 are suitable for defining the thickness of the object, said angle detectors being preferably of electronic type. However, suitable mechanical sensors are also known. According to one alternative the opening of the jaws is measured at a certain point as a linear length by suitable means (not shown) whereby the opening of the jaws at the point of the object to be measured, ie. the thickness of the object, will be achieved in accordance with the rules of geometry. All of the above mentioned means are known *per se* by the skilled person and thus not explained in more detail.

The information received from the sensor 68 can be displayed by a displaying device 65 operationally connected (69) therein. In addition to that it is possible to combine the data about the thickness of the object obtained by sensors 68 with said information about the length for instance in a micro processor means 64 operationally connected (dashed line 61) to means 68, 65 and 15, whereby it is possible to obtain, for instance, a volume, weight, price etc. of the consumed material when assuming that the width of the material is also known. According to one alternative it is possible to use the sensor 68 to detect the thickness variations in the material or to indicate a run out of the material. In such case the measuring device according to the invention may be adapted to alarm the user for instance from too thick or thin material or from excessive variations exceeding a preset value in material thickness.

According to one alternative a further measuring means measure the length of the cut performed ie. the width of the object. By combining said metering information to said metered length a surface area of the cut piece will be achieved.

Figure 6 discloses also an alternative embodiment of the backing member of the metering wheel 12, ie. a sliding shoe means 63. However, it is to be noted that in some embodiments the backing member is not necessary as is the case when, for example, the measuring occurs on the top of an even plane, such as on a table plate, whereby the measuring device can be pushed against the plate. In such cases where measurements extending for a distance from the sheet edge, such as in case of so called crosswise measurement, ie. a measurement from one corner of the sheet to another opposite corner along an imaginary hypotenuse extending in angle through the sheet, the use of the backing member is not even possible.

Even though this kind of measuring device with no backing member is not especially disclosed, the design thereof is obvious. It is also possible to use the disclosed measuring devices in a manner described above by simply measuring with the back sides, ie. such that, for instance of figure 6, the measuring device is turned upside down and the roll means 12 is drawn on the surface of the object.

In one embodiment a registering and storage unit 64 of the detected measurement information is connected to the measuring device, said unit being preferably a micro processor which collects and stores either all of the information received or only a predefined portion of it. This information may include, in addition to various metering data such as the sizes of the cut pieces or the overall amount of material etc., the amount of performed cuts, statistical data of the material thicknesses etc. information which the users of the device may feel necessary to collect. The collected information can be transmitted further to another apparatus or system, such as to a storage accounting system for example by means of a suitable fixed connection means 62 or by suitable wireless information transmission method.

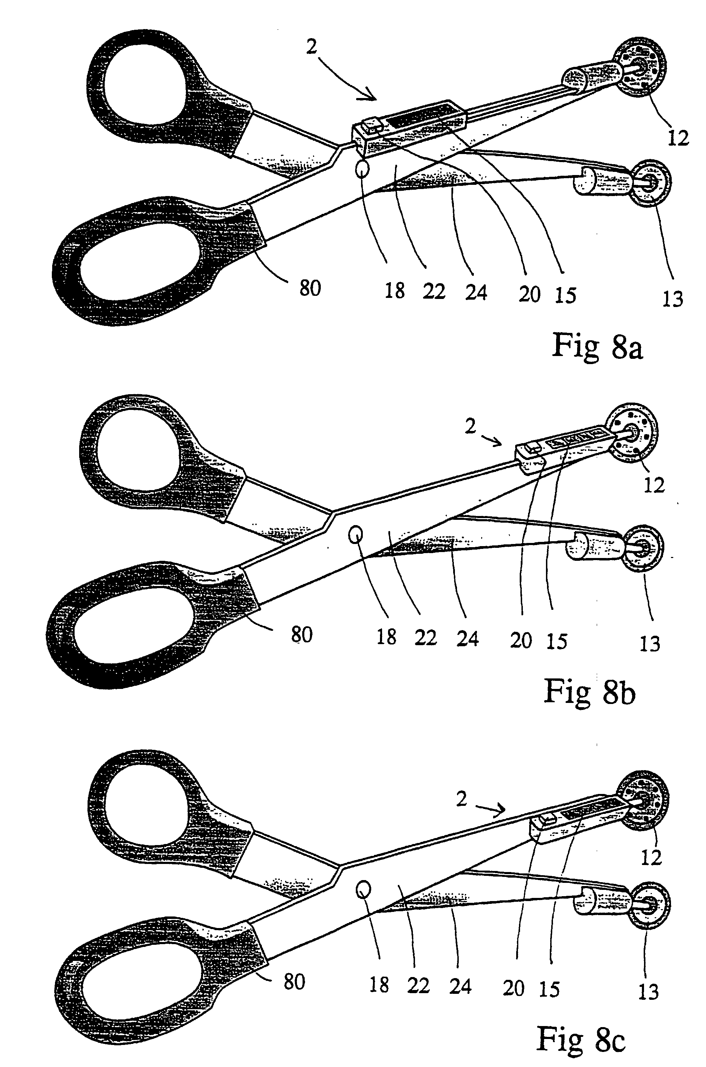

Figures 8a, b and c disclose known scissor means 80 to which a measuring device 2 according to the invention is removably disposed. The display means 15 and the roll means 12 combined therein are attached to an upper blade 22 and the backing roll 13 is attached to a lower blade 24. As is disclosed in the figures the attachment of the metering means may occur in various manners, such as to the top end of the blade closely adjacent to the wheel 12 (8b), on the side of the blade (8c), or closely adjacent to the pivoting point 18 (8a). Also other points of attachment such as the finger holes can be utilized. The metering device 2 according to the invention may be connected to already existing normal scissor means bought without any measuring device, as is shown in figures 8.

According to one alternative (not shown) the blade means of the measuring device such as 11, 22, 24 or 40 are arranged to be replaced, for example, in accordance to the material to be cut or for the replacement of a new sharpened blade.

According to one preferred embodiment of the invention the measuring of a fabric or similar web-like, sheet-like, band-like or similar material is performed such that the person measuring sets an object 8 to be measured between a metering roll 12 and a counter part thereof such as another roll 13 of the measuring device 2 in his or hers hand and positions the rolls such that the object to be measured is solidly between them. Thereafter the measuring device 2 is moved by hand along the edge of the object 8, whereby the measurement information display means 15 show the proceeding of the measurement. The moving is stopped when a desired given length is obtained or when a customer wishes so. Thereafter the user may, according to one preferred embodiment, cut the object off at a desired point by means of cutting means 11 arranged in said measuring device. The measuring device can be subsequently nullified by pressing nullifying button 20.

According to one alternative a desired length can be preset to the measuring device whereby the device can, for example, stop ie. the metering roll 12 of the device can lock and the user thus knows that the length has become full. According to one alternative the device gives at this stage a sound signal and in another case a signal light(s) is/are used.

The object to be measured can, of course, be moved relative to the measuring device or the movements of them both can be combined.

Thus the invention provides a device and a method by means of which the measuring operations done, for instance, in shops are made essentially easier and faster while an essential improvement in precision and reliability of the measurements is achieved.

It is noted that the above described examples of the embodiments of the inventions do not limit the scope of the invention as defined in the claims. Upon reading the above specification and the drawings it is obvious for the skilled person to use other methods for detecting and measuring the amount of the relative movement between the object to be measured and the measuring device in connection with the apparatus according to the invention instead of roll 12 shown in the figures, in which method there may not necessarily be any contact with the object to be measured. It is also to be noted that even though the figures do not disclose an essential small measuring device which could be held by hand and which is easy to carry with, for instance, in a pocket, belongs this kind of device comprising only a metering means and a measurement display means and in which device the outer dimensions are defined by the same also to the scope of the invention. It is also to be noted that the disclosed device and the method are not intended to be used only in shops and similar, but that they can also be used in connection with industry, agriculture, research and any other such activity in which there is a need to measure in a fast, easy and reliable manner length, width and/or thickness dimensions of especially sheet-like objects having essentially even and continuous surfaces.

## Claims

1. A measuring device adapted to be held by hand, comprising means (12; 12',32) for detecting a measurement information on basis of a relative movement between an object (8) to be measured and the measuring device (2), and measurement information display means (15) operationally connected (21) to said measurement information detecting means (12; 12',32), **characterized in that** the measuring device comprises integrated means (11;22,24;40;80) for cutting or severing the object (8) to be measured.

2. A measuring device according to claim 1, **characterized in that** said means for cutting or severing the object to be measured comprise at least one blade means (11; 40).

3. A measuring device according to claim 1, **characterized in that** said means for cutting or severing the object to be measured comprise at least one movable scissor blade means (22,24).

4. A measuring device according to any of claims 1 to 3, **characterized in that** said display means are arranged for displaying numerical measurement information, said display means being, with respect to their operational principles, mechanical or electronical numeric displays (15).

5. A measuring device according to any of claims 1 to 3, **characterized in that** said display means are arranged for displaying numerical measurement information, said display means being devices which give a light or sound signal.

6. A measuring device according to any of claims 1 to 5, **characterized in that** it further includes means (68) for detecting at least one further measurement information from the object to be measured and means (65) for indicating the further detected measurement information data.

7. A measuring device according to any of claims 1 to 6, **characterized in that** said measurement information detecting means (12; 12',32) and/or said display means (15) and/or any converting means converting the received measurement information into a form which can be displayed, as well as any detecting and indicating means (68,65) for detecting and indicating at least one further measurement information data is/are operationally connected to a suitable measurement information handling and/or storage means (62), which preferably is a micro processor means arranged in the measuring device.

8. A measuring device according to any of claims 1 to 7, **characterized in that** it further comprises means (62) for connecting the measuring device to form a part of an information and control system so as to transfer information to said system and for receiving information from said system, said connection and transfer means being based on a operational connection provided by a mechanical or by a wireless connection.

9. A measuring device according to any of claims 1 to 3, **characterized in that** at least part of said means (11; 22,24;40;80) for cutting or severing the object to be measured is removable and/or replaceable.

10. A method for measuring objects, such as sheets of fabric, paper, metal or plastic and similar, said method comprising the steps of:
placing a hand-held measuring device by hand to an operational connection with an object, providing a relative movement between the surface of the object and the hand-held measuring device, detecting a measurement information from the amount of the relative movement between the surface of the object and the measuring device by means of a suitable detecting means, converting the received measurement information into a form which can be displayed, and cutting and/or severing the object to be measured by blade means provided in the measuring device.

11. A method according to claim 10, **characterized in that** the measurement data is displayed as a number formed by a succession of numbers.

12. A method according to claim 10, **characterized in that** the measurement data is displayed by means of a light or a sound signal.

13. A method according to any of claims 10 to 12, **characterized in that** it further includes a step of transferring the received measurement information to a suitable measurement information handling and/or storage means.

14. A method according to any of claims 10 to 13, **characterized in that** it comprises a step for removable attaching the measuring device in connection with the cutting means, such as scissor means.

## Patentansprüche

1. Vorrichtung zum Messen, welche geeignet ist, in der Hand gehalten zu werden, mit Mitteln (12; 12'; 32) zum Feststellen einer Meßinformation auf Basis einer Relativbewegung zwischen einem zu messenden Gegenstand (8) und der Meßvorrichtung (2) und einer Meßinformationsanzeige (15), welche in Wirkverbindung (21) mit den Feststellungsmitteln (12; 12'; 32) der Meßinformation steht, **dadurch gekennzeichnet, daß** die Meßvorrichtung integrierte Mittel (11; 22; 24; 40; 80) zum Schneiden oder Abtrennen des zu messenden Gegenstandes (8) enthält.

2. Meßvorrichtung nach Anspruch 1, **dadurch gekennzeichnet, daß** die Mittel zum Schneiden oder Abtrennen des zu messenden Gegenstandes mindestens eine Klinge (11; 40) aufweisen.

3. Meßvorrichtung nach Anspruch 1, **dadurch gekennzeichnet, daß** die Mittel zum Schneiden oder Abtrennen des zu messenden Gegenstandes mindestens eine bewegliche Schere (22; 24) aufweisen.

4. Meßvorrichtung nach einem der Ansprüche 1 bis 3, **dadurch gekennzeichnet, daß** die Anzeigemittel zur Anzeige numerischer Meßinformation ausgelegt sind, wobei diese Mittel hinsichtlich ihrer Arbeitsweisen mechanische oder elektronische numerische Displays (15) besitzen.

5. Meßvorrichtung nach einem der Ansprüche 1 bis 3, **dadurch gekennzeichnet, daß** das die Anzeigemittel zur Anzeige von numerischer Meßinformation ausgelegt und Vorrichtungen sind, die ein Licht- oder Tonsignal abgeben.

6. Meßvorrichtung nach einem der Ansprüche 1 bis 5, **dadurch gekennzeichnet, daß** sie ferner Mittel (68) zum Erfassen mindestens einer weiteren Meßinformation vom zu messenden Gegenstand und Mittel (65) zur Anzeige der weiteren Meßinformationsdaten aufweist.

7. Meßvorrichtung nach einem der Ansprüche 1 bis 6, **dadurch gekennzeichnet, daß** die Mittel (12; 12'; 32) zum Erfassen der Meßinformation und/oder die Anzeigemittel (15) und/oder die Umwandlungsmittel zur Umwandlung der aufgenommenen Meßinformation in eine anzeigbare Form, ebenso wie beliebige Erfassungs- und Anzeigemittel (68; 65) zur Erfassung und Anzeige mindestens eines weiteren Meßinformationswertes ist/sind und operativ an geeignete Bearbeitungsund/oder Speichermittel (62) für die Meßinformation angeschlossen sind wie vorzugsweise Mikroprozessor-Mittel, welche in der Meßvorrichtung angeordnet sind.

8. Meßvorrichtung nach einem der Ansprüche 1 bis 7; **dadurch gekennzeichnet, daß** sie weiterhin Mittel (62) zum Anschluß der Meßvorrichtung aufweist, um einen Teil eines Informations- und Regelsystems zu bilden, um derart Information an das System zu übertragen und Information aus dem System aufzunehmen, wobei das Anschluß- und Übertragungsmittel auf einer Wirkverbindung beruht, die durch einen mechanischen oder kabellosen Anschluß vorgesehen ist.

9. Meßvorrichtung nach einem der Ansprüche 1 bis 3, **dadurch gekennzeichnet, daß** mindestens ein Teil der Mittel (11; 22; 24; 40; 80) zum Schneiden oder Abtrennen des zu messenden Gegenstandes abnehmbar und/oder ersetzbar ist.

10. Verfahren zum Messen von Gegenständen wie Tücher, Papier, Metall oder Kunststoff und dergleichen, welches die Schritte aufweist: Handplazieren einer handgehaltenen Meßvorrichtung in einer Wirkverbindung mit einem Gegenstand, Verursachung einer Relativbewegung zwischen der Oberfläche des Gegenstandes und der handgehaltenen Meßvorrichtung, Erfassen einer Meßinformation aus dem Betrag der Relativbewegung zwischen der Oberfläche des Gegenstandes und der Meßvorrichtung mit Hilfe geeigneter Erfassungsmittel, Umwandlung der empfangenen Meßinformation in eine anzeigbare Form und Schneiden und/oder Abtrennen des zu messenden Gegenstandes durch Klingen aufweisende Mittel, welche in der Meßvorrichtung angeordnet sind.

11. Verfahren nach Anspruch 10, **dadurch gekennzeichnet, daß** die Meßdaten als eine Zahlenfolge angezeigt wird.

12. Verfahren nach Anspruch 10, **dadurch gekennzeichnet, daß** der Meßwert mittels Licht- oder Tonsignal angezeigt wird.

13. Verfahren nach einem der Ansprüche 10 bis 12, **dadurch gekennzeichnet, daß** es weiterhin einen Übertragungsschritt der empfangenen Meßinformation an ein geeignetes Mittel zur Handhabung oder Speicherung der Meßinformation aufweist.

14. Verfahren nach einem der Ansprüche 10 bis 13, **dadurch gekennzeichnet, daß** es einen Schritt zur abnehmbaren Befestigung der Meßvorrichtung an den Schneidmitteln aufweist, wobei diese scherenartig sind.

## Revendications

1. Dispositif de mesure apte à être tenu à la main, comprenant des moyens (12 ; 12', 32) pour détecter une information de mesure sur la base d'un mouvement relatif entre un objet (8) à mesurer et le dispositif de mesure (2), et des moyens d'affichage (15) des informations de mesure fonctionnellement reliés (21) auxdits moyens de détection (12 ; 12', 32) des informations de mesure, **caractérisé en ce que** le dispositif de mesure comprend des moyens intégrés (11 ; 22, 24 ; 40 ; 80) pour couper ou séparer l'objet (8) à mesurer.

2. Dispositif de mesure selon la revendication 1, **caractérisé en ce que** lesdits moyens pour couper ou détacher l'objet à mesurer comprennent au moins un moyen formant lame (11 ; 40).

3. Dispositif de mesure selon la revendication 1, **caractérisé en ce que** lesdits moyens pour couper ou détacher l'objet à mesurer comprennent au moins un moyen formant lame de ciseaux mobile (22, 24).

4. Dispositif de mesure selon l'une des revendications 1 à 3, **caractérisé en ce que** lesdits moyens d'affichage sont agencés pour afficher des informations de mesure numériques, lesdits moyens d'affichage étant, par rapport à leurs principes de fonctionnement, des affichages numériques mécaniques ou électroniques (15).

5. Dispositif de mesure selon l'une des revendications 1 à 3, **caractérisé en ce que** lesdits moyens d'affichage sont agencés pour afficher des informations de mesure numériques, lesdits moyens d'affichage étant des dispositifs qui émettent un signal lumineux ou sonore.

6. Dispositif de mesure selon l'une des revendications 1 à 5, **caractérisé en ce qu'**il comprend en outre des moyens (68) pour détecter au moins une information de mesure supplémentaire de l'objet à mesurer et un moyen (65) pour indiquer les données d'informations de mesure supplémentaires détectées.

7. Dispositif de mesure selon l'une des revendications 1 à 6, **caractérisé en ce que** lesdits moyens de détection (12 ; 12', 32) des informations de mesure et/ou lesdits moyens d'affichage (15) et/ou tout moyen de conversion convertissant l'information de mesure reçue en une forme qui peut être affichée, ainsi que tout moyen de détection et d'indication (68, 65) pour détecter et indiquer au moins une donnée d'information de mesure supplémentaire est/sont opérationnellement connectés à un moyen de manipulation et/ou de stockage d'informations de mesure approprié (62) qui est de préférence un moyen formant microprocesseur agencé dans le dispositif de mesure.

8. Dispositif de mesure selon l'une des revendications 1 à 7, **caractérisé en ce qu'**il comprend en outre un moyen (62) pour la connexion du dispositif de mesure pour qu'il fasse partie d'un système d'information et de contrôle de manière à transférer des informations audit système et pour recevoir des informations dudit système, ledit moyen de connexion et de transfert étant basé sur une connexion opérationnelle réalisée par une connexion mécanique ou par une connexion sans fil.

9. Dispositif de mesure selon l'une des revendications 1 à 3, **caractérisé en ce qu'**au moins une partie desdits moyens (11 ; 22, 24 ; 40 ; 80) pour couper ou détacher l'objet à mesurer est amovible et/ou remplaçable.

10. Procédé pour mesurer des objets, comme des feuilles d'étoffe, de papier, de métal ou de plastique et similaire, ledit procédé comprenant les étapes consistant à :
placer un dispositif de mesure tenu à la main en une connexion fonctionnelle avec un objet, réaliser un déplacement relatif entre la surface de l'objet et le dispositif de mesure tenu à la main, détecter une information de mesure à partir de la quantité du déplacement relatif entre la surface de l'objet et le dispositif de mesure par un moyen de détection approprié, convertir l'information de mesure reçue en une forme qui peut être affichée, et couper et/ou détacher l'objet à mesurer par un moyen formant lame prévu dans le dispositif de mesure.

11. Procédé selon la revendication 10, **caractérisé en ce que** la donnée de mesure est affichée sous forme de nombre formé par une succession de nombres.

12. Procédé selon la revendication 10, **caractérisé en ce que** les données de mesure sont affichées au moyen d'un signal lumineux ou sonore.

13. Procédé selon l'une des revendications 10 à 12, **caractérisé en ce qu'**il comprend en outre une étape consistant à transférer l'information de mesure reçue à un moyen de manipulation et/ou de stockage d'informations de mesure approprié.

14. Procédé selon l'une des revendications 10 à 13, **caractérisé en ce qu'**il comprend une étape consistant à attacher amoviblement le dispositif de mesure en connexion avec le moyen de coupe, comme un moyen formant ciseaux.
